# EUROPEAN PATENT SPECIFICATION

(11) **EP 3 235 191 B1**
(45) Date of publication and mention of the grant of the patent: **10.07.2019**
(21) Application number: 15876742.6
(22) Date of filing: 13.11.2015
(51) Int. Cl.: H04L 12/721, H04L 12/713, H04L 12/729, H04L 12/751

(54) **SYSTEM AND METHOD FOR JOINT OPTIMIZATION OF SOURCE SELECTION AND TRAFFIC ENGINEERING**
SYSTEM UND VERFAHREN ZUR GEMEINSAMEN OPTIMIERUNG DER QUELLENAUSWAHL UND VERKEHRSMANIPULATION
SYSTÈME ET PROCÉDÉ POUR OPTIMISATION CONJOINTE DE SÉLECTION DE SOURCES ET D'INGÉNIERIE DE TRAFIC

(30) Priority: 08.01.2015 US 201514592616
(43) Date of publication of application: 25.10.2017
(73) Proprietor: HUAWEI TECHNOLOGIES CO., LTD., Guangdong 518129 (CN)
(72) Inventor: DAO, Ngoc Dung, Ottawa, Ontario K2T 0C7 (CA); LI, Xu, Ottawa, Ontario K2J 0M4 (CA); FARMANBAR, Hamidreza, Ottawa, Ontario K2M 0E1 (CA)
(74) Representative: Pfenning, Meinig & Partner mbB
(86) International application number: PCT/IB2015/058788
(87) International publication number: WO 2016/110755

(56) References cited:
- EP-A1- 2 530 899
- WO-A1-2005/117386
- WO-A1-2012/175145
- CN-A- 103 516 607
- US-A1- 2004 172 470
- US-A1- 2004 172 470
- US-A1- 2011 225 311
- US-A1- 2011 271 007
- US-A1- 2014 098 673

## Description

### BACKGROUND

This disclosure relates to a system and method for optimizing the selection of content sources and routing options in a network.

In a content delivery network or content distribution network (CDN) system, the same data can be stored at multiple content containers or sources such as content servers and local caching centers, and numerous routing options exist between the content sources and a content receiving device. CDN's will generally use a server selection mechanism based on one or more criteria such as physical distance, latency, load balancing and cost when selecting a particular content server to satisfy a user request from a requesting device. Additionally, CDN's will generally use traffic engineering (TE) to apply similar criteria to select the path and data rate through the network from a selected content source to the requesting device. An example of network routing in a content delivery network, is disclosed in document US2011/271007.

### SUMMARY

The invention is defined by the appended claims.

### BRIEF DESCRIPTION OF THE DRAWINGS

For a more complete understanding of this disclosure, reference is now made to the following description taken in conjunction with the accompanying drawings listed below.
Figure 1 is a schematic diagram of an example of a content distribution network (CDN) to which example embodiments of the method and system described herein can be applied.
Figure 2 is a flow diagram illustrating a method for jointly optimizing data source and routing selections in a CDN according to example embodiments;
Figure 3 is a schematic diagram of an example of a network topology created for the CDN of Figure 1 according to example embodiments.
Figure 4 shows an example optimisation formulation.
Figure 5 illustrates an example of distributed content caching according to example embodiments.

Like reference numerals are used throughout the Figures to denote similar elements and features. While aspects of the present disclosure will be described in conjunction with the illustrated embodiments, it will be understood that it is not intended to limit the present disclosure to such embodiments.

### DESCRIPTON OF EXAMPLE EMBODIMENTS

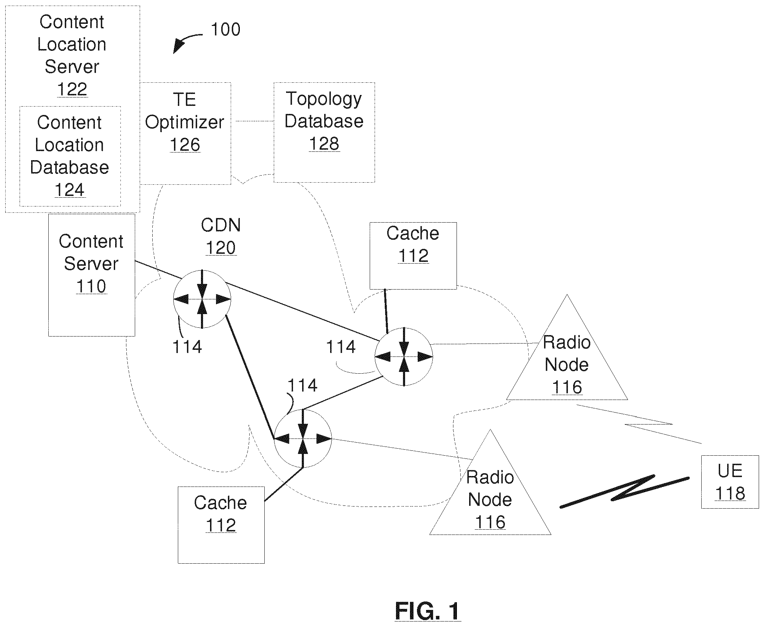

Figure 1 represents a communications network, which may for example be a content distribution network (CDN) 120, to which example embodiments of the system and method to optimize source selection and traffic engineering (TE) can be applied. CDN 120 may include one or more wired communications networks or wireless communications networks or a combination of wired and wireless communications networks. CDN 120 may operate according to one or more standards or technologies including but not limited to fourth generation (4G) or fifth generation (5G) telecommunications networks, Long-Term Evolution (LTE), 3rd Generation Partnership Project (3GPP), Universal Mobile Telecommunications System (UMTS) and other wireless or cellular communications networks.

In the CDN 120 of Figure 1, the same data can be stored at multiple data source or data container nodes, including for example one or more content servers 110 and content caches 112. Data is routed through CDN 120 by routers 114, and transmitted wirelessly to a receiving device such as user equipment (UE) 118 through network gateway nodes such as radio nodes 116, which may for example include base stations or wireless access points. Content caches 112 can be physically implemented at different network nodes within or external to CDN 120, including for example at routers 114, radio nodes 116 or other gateway nodes. Although receiving device UE 118 is shown in Figure 1 as a wireless communications device, data receiving devices may also include devices that are connected by wired connections through gateway nodes to CDN 120.

In a typical data access situation, a UE 118 sends a request for data to CDN 120. In conventional CDN systems, data retrieval is a two step process in which a suitable content source (e.g. content server 110 or a content cache 112) is selected to provide the requested data, following which a path and data rate through CDN 120 from the selected data source to UE 118 is determined. The first step, namely selection of a content source, is typically done either by the requesting device or by the content provider. For example, in peer-to-peer (P2P) networking, when a UE 118 joins a P2P network, the UE 118 is informed of the location of available data sources (which can include other peers, e.g. other UE devices 118) and the UE 118 then selects which peer devices to access, which typically results in suboptimal selection of content sources. In the case of server selection by the data provider, commercial content providers such as on-line video services have multiple data centers to avoid overload and reduce transmission delay by bringing data closer to users. The selection of the content source performed by the content provider is typically based on geographical location of the requesting communications device 118 and load balancing considerations, which can be suboptimal from the perspective of traffic engineering. In both P2P and commercial CDN systems, a suboptimal content source selection then results in suboptimal TE decisions.

With the increasing use of CDN networks to deliver content in the P2P and commercial distribution environments, and the proliferation of data sources within networks (including for example, data caching at femto-cell radio base stations), optimal selection of data sources and optimal network routing from data sources to content users is highly desirable.

Methods and systems for jointly optimizing both the selection of data sources and traffic engineering (for example path selection and rate allocation) within CDN 120 will now be described in accordance with example embodiments. As shown in Figure 1, in one example embodiment, an optimization system 100 includes a content location server 122 and a traffic engineering (TE) optimizer 126.

In example embodiments, the content location server 122 is represented by an IP address and implemented internally or externally to the CDN 120 to track the location of content stored in data sources that are part of or accessible to CDN 120. The content location server 122 could for example be implemented on content server 110. The content location server 122 maintains a content location database 124 that identifies participating data sources and the content that is available from each of the data sources. In the example of Figure 1, content location database 124 will store the address (or other identifier) of the three available data sources (namely content server 110 and each of caches 112), along with information that identifies an inventory of what data is available at each of the data sources. In some example embodiments, the content location server 122 is configured to periodically poll data sources in CDN 120 to determine if the data stored at such data sources has changed and update the content inventory in the content location database 124 accordingly. In some example embodiments, participating data sources are configured to send messages to content location server 122 advising of changes in locally stored content in order to enable content location database 124 to be updated. Accordingly, at any given time, content location server 122 has a reasonably current view of what content is stored where at data sources available to the CDN 120.

TE optimizer 126 is configured to select paths and data rates for transmitting data through CDN 120, and similar to content location server 122 may also be represented by an IP address and can be implemented on a server at a node of CDN 120. In some examples, TE optimizer 126 is implemented at the same network location as content location server 122. In example embodiments, the TE optimizer 126 either maintains or has access to a topology database 128 that stores a list of the physical elements of CDN 120, including data sources (e.g. content server 110 and caches 112), routers 114, radio nodes 116, and the communication links between these elements. In one example, the topology database 128 is updated after physical changes occur to CDN 120. In alternative example embodiments, the features of content location server 122 and TE optimizer 126 may be implemented on a common server, or may be distributed over multiple servers. Furthermore, in some alternative embodiments, some of the features that are described herein as being performed at the content location server 122 may instead be preformed by the TE optimizer 126, and some of the features that are described herein as being performed at the TE optimizer 126 may instead be performed at content location server 122. In some example embodiments, at least some of the functionality of the content location server 122 and TE optimizer 126 may be implemented at a UE device 118.

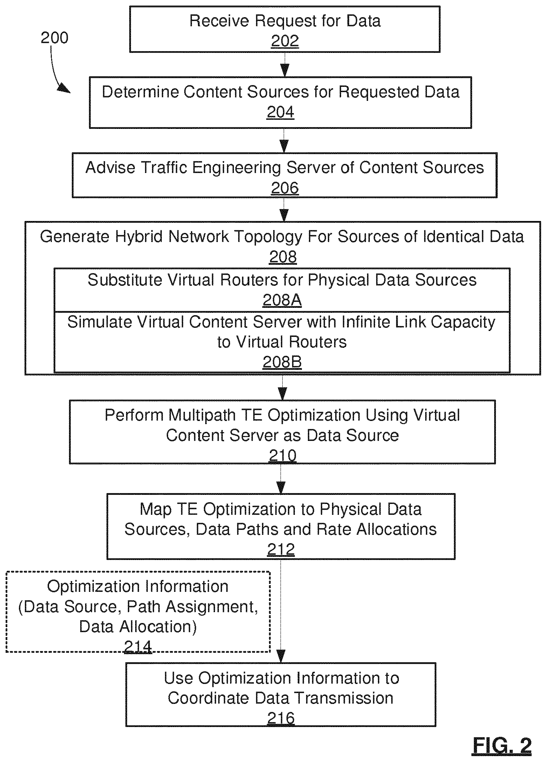

Figure 2 illustrates an example method 200 for joint source and routing optimization for application to CDN 120. As shown in Figure 2, method 200 starts with a request from UE 118 for specified data (Action 202). In an example embodiment, the content request is received by the content location server 122 from UE 118, following which the content location server 122 then accesses content location database 124 to determine what content sources 110, 112 contain the requested data (Action 204) and sends a message to TE optimizer 126 that identifies the UE 118 that has made the content request and the content sources 110, 112 that the requested data is available from (Action 206). In the currently discussed example, each of the data sources 110, 112 include all of the requested data, although as will be discussed in greater detail below, in some example embodiments different data segments may be distributed across different data sources with various levels of data overlap.

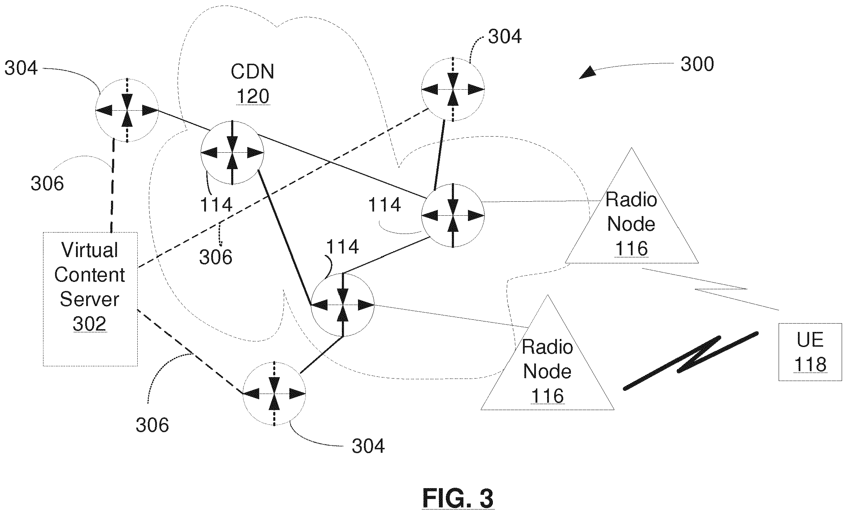

TE optimizer 126 uses the information received from content location server 122 and the information contained in topology database 128 to generate a hybrid network topology for CDN 120 that comprises a combination of virtual and physical network nodes (Action 208). Figure 3 schematically represents such a hybrid network topology 300. Generating the hybrid network topology 300 includes substituting virtual routers 304 for each of the physical data sources 110, 112 in CDN 120 that have been identified by content location server 122 as containing the data requested by UE 118 (Action 208A). As shown in Figure 3, in the present example the data requested by UE 118 is available at each cache 112 and also content server 110, and accordingly each of the content server 110 and cache servers 112 are represented as respective virtual routers 304 in network topology 300. Generating the hybrid network topology 300 also includes simulating a virtual content server 302 that is connected by virtual infinite capacity communications links 306 to each of the virtual routers 304 (Action 208B). Each of the virtual communications links 306 is an infinite bandwidth, zero latency link. The remaining physical elements of the CDN 120 are included in the hybrid network topology 300.

Accordingly, in the hybrid network topology 300, a set of physically dispersed data sources that include the same data is modeled as a single virtual data source (virtual content server 302) with infinite capacity communications links 306 to a plurality of virtual routers 304, with each virtual router 304 replacing and taking the location of a respective one of the actual physical data sources 110, 112. Thus, the virtual routers 304 act as the interface between the actual physical elements of the hybrid network topology 300 and the virtual elements of the network topology 300.

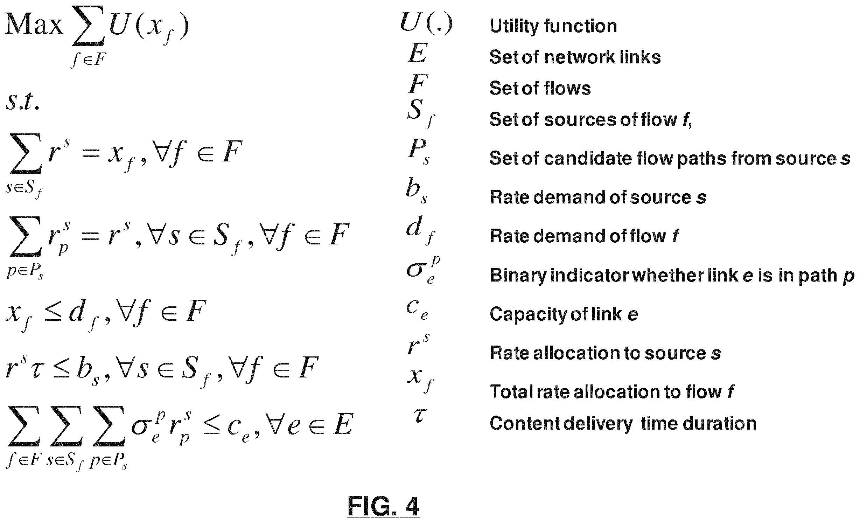

TE optimizer 126 then performs multipath TE optimization using the virtual content server 302 as the sole data source to determine the optimal paths and data rates to use in hybrid network 300 to get the requested data from the virtual content server 302 to UE 118 (Action 210). The replacement of physical data sources with virtual routers 304 connected to a common virtual content server 302 data source by infinite capacity links greatly simplifies the calculations needed to be done for path selection for TE optimization as the calculations can be done on the basis of a single source. A number of single source multi-path optimization algorithms can suitably be used by TE optimizer 126, depending on the attributes that are desired to be optimized (cost, bandwidth usage, path congestion, wireless node congestion, latency, etc.). By way of non-limiting example, the optimization algorithm set out in Figure 4 can be applied, which seeks to maximize a utility function within a time duration.

In an example embodiment, the result of the optimization algorithm as performed by TE optimizer 126 is an optimized routing in the form of a list that identifies multiple network paths between virtual content server 302 and UE 118, along with a data allocation for each of the multiple paths. In an example embodiment, the data allocation includes both a data rate and a data amount. The TE optimizer 126 then maps the identified paths and associated data/rate allocations to each one of the physical data sources (Action 212). In particular, each of the identified paths in the hybrid topology 300 will include one of the virtual routers 304, and as noted above each of the virtual routers 304 represents an actual physical data source (e.g. physical content server or cache). Accordingly, the TE optimizer 126 is able to replace each of the virtual elements in the identified network paths with a physical data source and thereby provide optimization information 214 for the data requested by UE 118. Optimization information 214 identifies, for the requested data: (i) multiple data sources (e.g. content server 110 and caches 112); (ii) one or more assigned paths from each of the data sources to the UE 118; (iii) a data allocation for each of the assigned paths - in an example embodiment, the data allocation includes an allocated data rate for each of the assigned paths and an allocated amount of data (for example, the number of bits or bytes of data) to be sent from each of data source 110, 112..

In an example embodiment, the optimization information 214 is provided by TE optimizer 126 to the content location server 122 which then uses the information to coordinate the transmission of the requested data from the data sources through the assigned paths in CDN 120 to UE 118 (Action 216). In example embodiments, the requested data is transmitted through CDN 120 using an application layer forward error correction (AL-FEC) scheme in which a message of *k* symbols is translated into a longer message (code word) with n symbols such that the original message can be recovered from a subset of the n symbols. In such an embodiment data segmentation between content servers does not have to be coordinated at the bit level, so long as the combination of content sources collectively send the total number of encoded data segments required to recover the original message. By way of example, fountain coding could be used to create a system that is segmentation and data source agnostic provided a threshold number of data symbols are cumulatively transmitted from the content sources in total. In such example embodiments, the content location server 122 is aware, based on the optimization information 214, the amount of data to send from each particular content source 110, 112. In one example embodiment the content location server 122 instructs each individual content source 110, 112 of the respective amount (example, the number of bits or bytes) of data it is assigned to send to UE 118, the path or paths to use, and the allocated data rate for each path or paths, and the individual content sources 110, 112 then transmit data as instructed. In some example embodiment, in conjunction with instructing the individual content sources 110, 112, the content location server 122 also advises the UE 118 of which individual content sources 110, 112 have been assigned to send the requested data to the UE 118, the amount of data assigned to each content source 110, 112, and the allocated data rate. In some example embodiments the content location server 122 may not communicate with the content sources 110, 112 but rather only advise the UE 118 of which individual content sources 110, 112 have been assigned to send the requested data to the UE 118, the amount of data assigned to each content sources, and the allocated data rate, following which the UE 118 requests the allocated amount of data form each of the respected data sources.

In some example, embodiments, data source coordination (Action 216) may be performed at UE 118 rather than the content location server 122, in which case the optimization information 214 generated by TE optimizer 126 is provided by content location server 122 to UE 118.

Although the example described above discusses a system in which AL-FEC is used such that data allocation can be done between data sources without specific regard to the order of individual content of data packets, in some example embodiments the system may use coding systems that require that specific data packets be sent from specific content sources. In such systems, the content location server 122 can be configured to ensure that specific data segments or packets are assigned to specific content sources to avoid duplication, such that the instructions sent from the content location server 122 to each of the content source 110, 112 specifies which data segments each content source 110, 112 is to send as well as the path to use to send the specified data and the data rates for the assigned paths. Alternatively, in some embodiments the content sources 110, 112 will only be advised by the content location server 122 of the amount of data and the assigned paths and data rates, with the content sources 110, 112 being configured to negotiate among themselves as to which respective data segments each content source 110, 112 will send in order to avoid duplication.

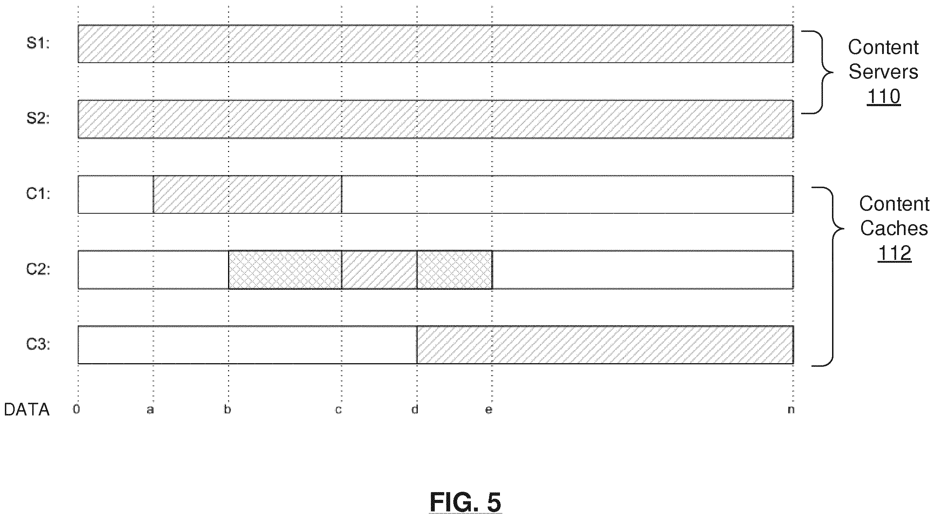

In the example embodiments described above, the entirety of the data requested by UE 118 was stored at each of the content sources 110, 112 within the CDN 120, as is often the case in a commercial data distribution network involving subscription services. However, distributed partial caching of data at multiple nodes in CDN 120, including for example at various network nodes such as radio nodes 116 and at multiple UE devices 118 can also occur, particularly in P2P environments. In this regard, an example embodiment will now be described in which the data requested by a UE 118 is distributed among different data sources. Figure 5 illustrates a distributed caching example in which content comprising Data 0-n is distributed among data sources in CDN 120 that include two content servers 110 (S1 and S2) and three content caches 112 (C1, C2 and C3). S1 and S2 each store content segment 0-n; C1 stores content segment a-c; C2 stores content segment b-e; and C3 stores content segment d-n. It will be noted that the segment at C2 overlaps with those at C1 and C3, and each of C1, C2 and C3 partially overlap with S1 and S2. In an example embodiment, one or more of C1, C2 or C3 may be located at a respective radio node 116 or other network node. The content location database 124 that is maintained by content location server 122 identifies the data sources S1, S2, C1, C2, C3 and the respective segment portions of data 0-n that is stored at each data source.

In the example of Figure 5, with further reference to Figures 1 and 2, content location server 122 receives a content request for Data a-e from UE 118 (Action 202). Content location server 122 then access content location database 124 to determine what content sources contain Data 0-e (Action 204). In the present example, content location server 122 will determine that all of Data 0-e is located at S1 and S2, and that C1, C2 and C3 each store respective sub-sets of Data 0-e. In such an example, the content location server 122 will identify where data overlap occurs between the respective content sources and advise the TE optimizer 126 (Action 206). Thus, in the illustrated example of Figure 5, content location server will advise the TE optimizer 126 that: (i) segment 0 is stored at S1 and S2; (ii) segment a-b is stored at S1, S2 and C1; (iii) segment b-c is stored at S1, S2, C1 and C2; (iv) segment c-d is stored at S1, S2 and C2; (v) segment d-e is stored at S1, S2, C2 and C3; and (vi) segment e-n is stored at S1, S2 and C3. In effect, in the example of Figure 5, data 0-n can be divided into six content segments that are each available from a unique combination of data sources.

As described above, TE optimizer 126 is configured to generate a hybrid network topology for sources of identical data (Action 208) in order to allow the TE optimizer 126 to apply a single source optimization algorithm to a multi-source environment. Thus, in the example of Figure 5, optimization is performed for each content segment that has been identified as being available at a unique combination of data sources. For example, in respect of content segment 0-a, TE optimizer 126 ignores C1, C2 and C3 and generates a hybrid network topology in which S1 and S2 are each replaced with virtual routers, which in turn are connected by infinite capacity data links to a single virtual content server (Actions 208A, 208B). Multipath TE optimization is then performed using the virtual content server as the single data source (Action 210) and the result is then mapped back to the physical network to determine how much of segment 0-a should be allocated to each of S1 and S2 and the path and data rate to be used by each of them to send segment 0-a to UE 118 (Action 212). TE optimizer 126 performs optimization Actions 208 to 212 for each of the identified content segments - for content segment a-b, optimization is performed for allocation among data sources S1, S2 and C1; for segment b-c, optimization is performed for allocation among data sources S1, S2, C1 and C2; for segment c-d optimization is performed for allocation among data sources S1, S2, and C2; for segment d-e optimization is performed for allocation among data sources S1, S2, C2 and C3; and for segment e-n, optimization is performed for allocation among data sources S1, S2 and C3. The resulting optimization information is then used to coordinate data transmission of data 0-e to UE 118.

In some example embodiments, the content location server 122 is configured to ignore data sources that do not include a threshold amount of the requested data. By way of example, in the context of Figure 5, upon receiving the request for data 0-e in Action 202, the content location server 122 could be configured to determine in Action 204 that the sub-set of data stored on C1 and C2 is too small to be efficiently included in the optimization actions, in which case C1 and C2 would be omitted from the list of content sources provided to the TE optimizer in Action 206 and the TE optimizer 126 would instead be advised that content segment 0-d was stored at S1 and S2 and content segment d-n was stored at S1, S2 and C3. TE optimizer 126 would then perform optimization Actions 208 -212 in respect of segment 0-d in the context of sources S1 and S2 and in respect of segment d-e in the context of S1, S2 and C3. Data sources C1 and C2 would be ignored.

It will thus be appreciated that systems and methods for allowing data source and route selection to be jointly optimized has been described herein.

Also disclosed are examples:
Example 1. The system of claim 13 wherein the content sources are configured to encode data sent therefrom into packets using an application layer forward error correction coding such that upon receipt of a threshold number of packets the data can be recovered at the receiving device.
Example 2. The system of Example 1 wherein the forward error correction coding comprises fountain coding.
Example 3. The system of claim 13 wherein the data allocation for each content source defines which part of the data to send from the content source to the receiving device.
Example 4. The system of claim 13 wherein the content location server is configured to advise the traffic optimizer of an amount of the data that is stored at each of the content sources.
Example 5. A computer program product comprising a non-transient computer readable medium storing computer instructions for implementing traffic optimization for routing data in a network from a plurality of content sources that store the data to a receiving device, comprising instructions causing a traffic optimizing processor to:
   generate a network topology in which each of the content sources that store the data are represented as virtual routers that are each connected to a common virtual content server by respective infinite capacity communication links;
   determine optimized routing through the network topology for the data from the virtual content server to the receiving device; and
   determine, in dependence on the optimized routing, a data allocation for each of the content sources to transmit data through the network to the receiving device.

The present disclosure provides certain example algorithms and calculations for implementing examples of the disclosed methods and systems. However, the present disclosure is not bound by any particular algorithm or calculation.

Although the present disclosure describes methods and processes with steps in a certain order, one or more steps of the methods and processes may be omitted or altered as appropriate. One or more steps may take place in an order other than that in which they are described, as appropriate.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution of the present disclosure may be embodied in the form of a software product. A suitable software product may be stored in a pre-recorded storage device or other similar non-volatile or non-transitory computer readable medium, including DVDs, CD-ROMs, USB flash disk, a removable hard disk, or other storage media, for example. The software product includes instructions tangibly stored thereon that enable a processing device (e.g., a personal computer, a server, or a network device) to execute examples of the methods disclosed herein.

The present disclosure may be embodied in other specific forms without departing from the subject matter of the claims. The described example embodiments are to be considered in all respects as being only illustrative and not restrictive. Selected features from one or more of the above-described embodiments may be combined to create alternative embodiments not explicitly described, features suitable for such combinations being understood within the scope of this disclosure.

All values and sub-ranges within disclosed ranges are also disclosed. Also, while the systems, devices and processes disclosed and shown herein may comprise a specific number of elements/components, the systems, devices and assemblies could be modified to include additional or fewer of such elements/components. For example, while any of the elements/components disclosed may be referenced as being singular, the embodiments disclosed herein could be modified to include a plurality of such elements/components. The subject matter described herein intends to cover and embrace all suitable changes in technology.

## Claims

1. A method for routing data in a network (300) from a plurality of content sources that store the data to a receiving device, **characterized by** comprising:
generating a network topology in which each of the content sources that store the data are represented as virtual routers that are each connected to a common virtual content server (302) by respective infinite capacity communication links;
determining optimized routing through the network topology for the data from the virtual content server to the receiving device;
determining, in dependence on the optimized routing, a data allocation for each of the content sources to transmit data through the network to the receiving device.

2. The method of claim 1 comprising providing, to each of the content sources, instructions in accordance with the data allocation for the content source, the instructions including one or more assigned paths between the content source and the receiving device and an allocated data rate for the one or more assigned paths.

3. The method of claim 1 comprising transmitting portions of the data from one or more of the content sources to the receiving device in accordance with the data allocation.

4. The method of claim 3 wherein the data allocation for each content source comprises a data rate for sending the data.

5. The method of claim 4 wherein the data allocation for each content source defines one or more paths between the content source and the receiving device.

6. The method of claim 3 wherein the data allocation for each content source defines one or more paths between the content source and the receiving device, a data rate to be used for each of the one or more paths, and an amount of the data to be sent by the content source.

7. The method of claim 3 comprising encoding data sent from the content sources into packets using an application layer forward error correction coding such that upon receipt of a threshold number of packets the data can be recovered.

8. The method of claim 6 wherein the forward error correction coding comprises fountain coding.

9. The method of any one of claims 1 to 8 wherein the data allocation for each content source defines which data to send from the content source to the receiving device.

10. The method of any one of claims 1 to 8 wherein the plurality of content sources include one or more of a content server, a gateway node, a network router or a data cache.

11. A system for optimizing traffic routing of data through a network (300) from a plurality of content sources that store the data to a receiving device, **characterized by** comprising:
a traffic optimizer configured to:
generate a network topology in which each of the content sources that store the data are represented as virtual routers that are each connected to a common virtual content server (302) by respective infinite capacity communication links;
determine an optimized routing through the network topology for the data from the virtual content server to the receiving device; and
determine, in dependence on the optimized routing, a data allocation for each of the content sources to transmit data through the network to the receiving device.

12. The system of claim 11 wherein the traffic optimizer is configured to provide, to each of the content sources, instructions in accordance with the data allocation for the content source, the instructions including one or more assigned paths between the content source and the receiving device and an allocated data rate for the one or more assign paths.

13. The system of claim 11 comprising:
a content location database that stores information identifying content sources available to the network and the content stored at the content sources;
a content location server configured to receive a content request corresponding to the data from the receiving device and to determine and advise the traffic optimizer, based on the content location database, the content sources that include the same data, the content location server being configured to receive from the traffic optimizer the data allocation determined for each of the content sources and coordinate the transmission of the data from among the content sources to the receiving devices in accordance with the data allocation.

14. The system of claim 13 wherein the data allocation for each content source comprises a data rate for sending the data.

15. The system of claim 13 wherein the data allocation for each content source defines one or more paths between the content source and the receiving device and a data rate for each of the one or more paths.

## Patentansprüche

1. Verfahren zum Weiterleiten von Daten in einem Netzwerk (300) aus einer Mehrzahl von Inhaltsquellen, die die Daten in einer Empfangseinrichtung speichern, **dadurch gekennzeichnet, dass** es umfasst:
Erzeugen einer Netzwerktopologie, in der jede der Inhaltsquellen, die die Daten speichern, als virtueller Router wiedergegeben ist, der jeweils durch entsprechende Kommunikations-Links mit unbegrenzter Kapazität mit einem gemeinsamen virtuellen Inhaltsserver (302) verbunden ist;
Ermitteln optimierten Routings durch die Netzwerktopologie für die Daten vom virtuellen Inhaltsserver zur Empfangseinrichtung;
in Abhängigkeit vom optimierten Routing, Festlegen einer Datenzuordnung für jede der Inhaltsquellen zum Senden von Daten durch das Netzwerk zur Empfangseinrichtung.

2. Verfahren nach Anspruch 1, umfassend das Bereitstellen für jede der Inhaltsquellen von Anweisungen entsprechend der Datenzuordnung für die Inhaltsquelle, wobei die Anweisungen einen oder mehrere zugewiesene Pfade zwischen der Inhaltsquelle und eine zugeordnete Datenrate für den einen oder die mehreren zugewiesenen Pfad(e) aufweisen.

3. Verfahren nach Anspruch 1, umfassend das Senden von Teilen der Daten von einer oder mehreren der Inhaltsquellen zu der Empfangseinrichtung entsprechend der Datenzuordnung.

4. Verfahren nach Anspruch 3, wobei die Datenzuordnung für jede Inhaltsquelle eine Datenrate zum Senden der Daten umfasst.

5. Verfahren nach Anspruch 4, wobei die Datenzuordnung für jede Inhaltsquelle einen Pfad oder mehrere Pfade zwischen der Inhaltsquelle und der Empfangseinrichtung definiert.

6. Verfahren nach Anspruch 3, wobei die Datenzuordnung für jede Inhaltsquelle einen Pfad oder mehrere Pfade zwischen der Inhaltsquelle und der Empfangseinrichtung, eine für jeden der ein oder mehreren Pfade zu verwendende Datenrate und einen Umfang der von der Inhaltsquelle zu sendenden Daten definiert.

7. Verfahren nach Anspruch 3, umfassend das Codieren von Daten, die von den Inhaltsquellen gesendet werden, in Pakete unter Verwendung einer Weiterleitungsfehler-Korrekturcodierung einer Anwendungsschicht, sodass die Daten beim Empfang einer Schwellenwert-Paketanzahl wiederhergestellt werden können.

8. Verfahren nach Anspruch 6, wobei die Weiterleitungsfehler-Korrekturcodierung Quellcodierung umfasst.

9. Verfahren nach einem Ansprüche 1 bis 8, wobei die Datenzuordnung für jede Inhaltsquelle definiert, welche Daten von der Inhaltsquelle zur Empfangseinrichtung gesendet werden sollen.

10. Verfahren nach einem der Ansprüche 1 bis 8, wobei die Mehrzahl von Inhaltsquellen einen oder mehrere aus einem Inhaltsserver, einem Gateway-Knoten, einem Netzwerk-Router oder einem Daten-Cache aufweist.

11. System zum Optimieren der Weiterleitung von Datenverkehr durch ein Netzwerk (300) aus einer Mehrzahl von Inhaltsquellen, die die Daten in einer Empfangseinrichtung speichern, **dadurch gekennzeichnet, dass** es umfasst:
einen Verkehrsoptimierer, ausgelegt zum Erzeugen einer Netzwerktopologie, in der jede der Inhaltsquellen, die die Daten speichern, als virtueller Router wiedergegeben ist, der jeweils durch entsprechende Kommunikations-Links mit unbegrenzter Kapazität mit einem gemeinsamen virtuellen Inhaltsserver (302) verbunden ist;
Ermitteln optimierten Routings durch die Netzwerktopologie für die Daten vom virtuellen Inhaltsserver zur Empfangseinrichtung;
in Abhängigkeit vom optimierten Routing, Festlegen einer Datenzuordnung für jede der Inhaltsquellen zum Senden von Daten durch das Netzwerk zur Empfangseinrichtung.

12. System nach Anspruch 11, wobei der Verkehrsoptimierer dafür ausgelegt ist, für jede der Inhaltsquellen Anweisungen entsprechend der Datenzuordnung für die Inhaltsquelle bereitzustellen, wobei die Anweisungen einen oder mehrere zugewiesene Pfade zwischen der Inhaltsquelle und der Empfangseinrichtung und eine zugeordnete Datenrate für den einen oder die mehreren zugewiesenen Pfad(e) aufweisen.

13. System nach Anspruch 11, umfassend:
eine Inhaltspositionsdatenbank, die Information speichert, die für das Netzwerk verfügbare Inhaltsquellen und den bei den Inhaltsquellen gespeicherten Inhalt identifiziert:
einen Inhaltspositionsserver, ausgelegt zum Empfangen einer den Daten von der Empfangseinrichtung entsprechenden Inhaltsanforderung und zum Festlegen und Anpassen des Verkehrsoptimierers basierend auf der Inhaltspositionsdatenbank, den Inhaltsquellen, die die gleichen Daten aufweisen, des Inhaltspositionsservers, ausgelegt zum Empfangen der für jede der Datenquellen festgelegten Datenzuordnung vom Verkehrsoptimierer, und zum Koordinieren der Datenübertragung von den mehreren Inhaltsquellen zu den Empfangseinrichtungen entsprechend der Datenzuordnung.

14. System nach Anspruch 13, wobei die Datenzuordnung für jede Inhaltsquelle eine Datenrate zum Senden der Daten umfasst.

15. System nach Anspruch 13, wobei die Datenzuordnung für jede Inhaltsquelle einen Pfad oder mehrere Pfade zwischen der Inhaltsquelle und der Empfangseinrichtung und eine Datenrate für jeden der ein oder mehreren Pfade definiert.

## Revendications

1. Procédé de routage de données dans un réseau (300) à partir d'une pluralité de sources de contenu qui stockent les données sur un dispositif de réception, **caractérisé en ce qu'**il comprend :
la génération d'une topologie de réseau dans laquelle chacune des sources de contenu qui stockent les données sont représentées en tant que routeurs virtuels, chacun étant relié à un serveur de contenu virtuel commun (302) par des liaisons de communication à capacité infinie respectives ;
la détermination d'un routage optimisé à travers la topologie de réseau pour les données à partir du serveur de contenu virtuel vers le dispositif de réception ;
la détermination, en fonction du routage optimisé, d'une attribution de données pour chacune des sources de contenu pour transmettre des données à travers le réseau vers le dispositif de réception.

2. Procédé selon la revendication 1 consistant à fournir, à chacune des sources de contenu, des instructions en fonction de l'attribution de données pour la source de contenu, les instructions comprenant un ou plusieurs trajets alloués entre la source de contenu et le dispositif de réception et un débit de données attribué à l'un ou aux plusieurs trajets alloués.

3. Procédé selon la revendication 1 consistant à transmettre des parties des données à partir d'une ou plusieurs des sources de contenu au dispositif de réception en fonction de l'attribution de données.

4. Procédé selon la revendication 3, dans lequel l'attribution de données pour chaque source de contenu comprend un débit de données permettant d'envoyer les données.

5. Procédé selon la revendication 4, dans lequel l'attribution de données pour chaque source de contenu définit un ou plusieurs trajets entre la source de contenu et le dispositif de réception.

6. Procédé selon la revendication 3, dans lequel l'attribution de données pour chaque source de contenu définit un ou plusieurs trajets entre la source de contenu et le dispositif de réception, un débit de données à utiliser pour chacun du ou des plusieurs trajets, et une quantité des données à envoyer par la source de contenu.

7. Procédé selon la revendication 3 comprenant le codage de données envoyées à partir des sources de contenu dans des paquets à l'aide d'un codage de correction d'erreur sans voie de retour de couche d'application de telle sorte que, lors de la réception d'un nombre seuil de paquets, les données puissent être récupérées.

8. Procédé selon la revendication 6, dans lequel le codage de correction d'erreur sans voie de retour comprend un codage de fontaine.

9. Procédé selon l'une quelconque des revendications 1 à 8, dans lequel l'attribution de données pour chaque source de contenu définit quelles données envoyer de la source de contenu au dispositif de réception.

10. Procédé selon l'une quelconque des revendications 1 à 8, dans lequel la pluralité de sources de contenu comprend un ou plusieurs éléments parmi un serveur de contenu, un noeud de passerelle, un routeur de réseau ou un cache de données.

11. Système permettant d'optimiser un routage de trafic de données à travers un réseau (300) à partir d'une pluralité de sources de contenu qui stockent les données sur un dispositif de réception, **caractérisé en ce qu'**il comprend :
un optimiseur de trafic configuré pour :
la génération d'une topologie de réseau dans laquelle chacune des sources de contenu qui stockent les données sont représentées en tant que routeurs virtuels, chacun étant relié à un serveur de contenu virtuel commun (302) par des liaisons de communication à capacité infinie respectives ;
la détermination d'un routage optimisé à travers la topologie de réseau pour les données à partir du serveur de contenu virtuel vers le dispositif de réception ; et
la détermination, en fonction du routage optimisé, d'une attribution de données pour chacune des sources de contenu pour transmettre des données à travers le réseau vers le dispositif de réception.

12. Système selon la revendication 11, dans lequel l'optimiseur de trafic est configuré pour fournir, à chacune des sources de contenu, des instructions en fonction de l'attribution de données pour la source de contenu, les instructions comprenant un ou plusieurs trajets alloués entre la source de contenu et le dispositif de réception et un débit de données attribué à l'un ou aux plusieurs trajets alloués.

13. Système selon la revendication 11 comprenant :
une base de données de localisation de contenu qui stocke des informations identifiant des sources de contenu disponibles sur le réseau et le contenu stocké au niveau des sources de contenu ;
un serveur de localisation de contenu configuré pour recevoir une demande de contenu correspondant aux données provenant du dispositif de réception, et pour déterminer et conseiller l'optimiseur de trafic, sur la base de la base de données de localisation de contenu, des sources de contenu qui comprennent les mêmes données, du serveur de localisation de contenu qui est configuré pour recevoir, à partir de l'optimiseur de trafic, l'attribution de données déterminée pour chacune des sources de contenu et coordonner la transmission des données parmi les sources de contenu vers les dispositifs de réception en fonction de l'attribution de données.

14. Système selon la revendication 13, dans lequel l'attribution de données pour chaque source de contenu comprend un débit de données permettant d'envoyer les données.

15. Système selon la revendication 13, dans lequel l'attribution de données pour chaque source de contenu définit un ou plusieurs trajets entre la source de contenu et le dispositif de réception et un débit de données pour chacun du ou des plusieurs trajets.
